(19) **Europäisches Patentamt / European Patent Office / Office européen des brevets**

(11) **EP 4 113 167 A1**

(12) **EUROPEAN PATENT APPLICATION**

(43) Date of publication:
**04.01.2023 Bulletin 2023/01**

(21) Application number: **21181986.7**

(22) Date of filing: **28.06.2021**

(51) International Patent Classification (IPC):
**G01S 13/90** $^{(2006.01)}$ **G01S 7/41** $^{(2006.01)}$

(52) Cooperative Patent Classification (CPC):
**G01S 7/415; G01S 7/417; G01S 13/9023**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Planetek Italia S.r.l.**
**70132 Bari (IT)**

(72) Inventors:
• **AIELLO, Antonello**
  **70132 BARI (IT)**
• **MASSIMI, Vincenzo**
  **70132 BARI (IT)**
• **SAMARELLI, Sergio**
  **70132 BARI (IT)**

(74) Representative: **Tana, Maria Gabriella et al**
**Praxi Intellectual Property S.p.A.**
**Via Mario Pagano, 69/A**
**20145 Milano (IT)**

(54) **SYSTEM FOR DETERMINING THE PRIORITY OF INSPECTION OF SATELLITE REMOTELY SENSED OBJECTS AND METHOD THEREOF**

(57) A system and relative method for determining the priority of inspection of environmental and man-made objects on the earth's surface, the system, comprising an arithmetic device that is configured to execute: processing of importing displacement measurement data derived from multi-temporal interferometry measurements of satellite SAR data over the objects to be monitored; processing of importing at least one information data record about the objects; processing of subdividing the objects into a plurality of elementary units (1,1',1",2,2',2",3,3",3", 4,4',4"), each of said unit (1,1',1",2,2',2",3,3",3",4,4',4") comprising a plurality of persistent scatterers and/or distributed scatterers; calculating at least a quantity dependent on the displacement for each selected scatterer; calculating, for each unit (1, 1',1", 2, 2', 2", 3, 3", 3", 4, 4', 4"), the difference between the quantity value of each selected scatterer inside the unit (1,1',1",2,2',2",3,3",3",4,4',4") and a quantity mean of the unit (1, 1', 1", 2, 2', 2", 3, 3", 3", 4, 4', 4"), so as to obtain a quantity difference value for each selected scatterer; dividing the mean of the quantity difference values of each unit (1,1',1",2,2', 2", 3,3", 3", 4,4', 4") by the maximum of the differences, thus obtaining a quantity difference ratio; dividing the quantity mean of each unit (1,1',1",2,2',2",3,3",3",4,4',4") by the quantity mean maximum, thus obtaining a quantity ratio; summing the quantity ratio and the quantity difference ratio, thus obtaining a score for each elementary unit (1, 1', 1", 2, 2', 2", 3, 3", 3", 4,4', 4"); processing of determining the priority of inspection of each unit (1,1',1", 2,2', 2", 3,3", 3", 4,4', 4") based on the score; and processing of displaying information on the score of each unit (1, 1', 1", 2, 2', 2", 3, 3", 3", 4, 4', 4") and/or a result of the determining of the priority of inspection on an output device.

Fig.1

EP 4 113 167 A1

**Description**

TECHNICAL FIELD OF THE INVENTION

The present invention relates to a system and a relative method, for determining the priority of inspection of objects on the earth's surface by using multi-temporal interferometry measurements of satellite SAR data. These objects can be part of the natural environment such as territories, or they can be man-made objects such as linear infrastructures (e.g. water sewer networks, transportations infrastructures), point infrastructures (e.g. electrical towers), polygonal infrastructures (e.g. buildings, settling tanks of wastewater of a treatment plant).

STATE OF THE ART

Land instability represents a serious source of danger for citizens safety, infrastructure safeguarding and environmental protection. Under the pressure of anthropogenic activities and climate change, the intensity and frequency of land instability phenomena are faster growing than before. As calamitous events, land instability phenomena can cause human injury, loss of life and economic resources, and damage facilities, properties and/or infrastructures, increased costs and delays to new developments.

The management of critical infrastructures (e.g. water and sewer networks, transportations infrastructures, electrical towers, private and public buildings, historical heritage, etc.) and urbanised territory is a complex and expensive task for multi-utility companies, operators and public entities, which are in need of ensuring the correct and safe functionality of crucial assets, as well as the safety of citizens. Multi-utility companies, operators and public entities spend a lot of financial resources maintaining their assets. Right now, policies are strictly oriented to recovery assets in case of disruption due to major problems.

Identifying high concern-level (or pre-critical) portions of infrastructures or territory before critical situations occur is a challenge.

Traditional campaigns for the regular monitoring of wide areas and infrastructures require considerable financial resources and time and are often complex to implement. The use of remotely-sensed data can overcome these limitations and provide frequent, accurate and accessible information thanks to the wide availability of spatial information. Remotely-sensed territories and infrastructure movements can be measured with millimetric accuracy by processing SAR (Synthetic Aperture RADAR) images. It is possible, indeed, to measure the distance between the sensor and the target over time, recording the time elapsed between the electromagnetic wave emission and the backscattered signal's reception. The comparison of distances measured over time allows the computation of territories or infrastructure displacements with millimetric precision. This technique is known as "multi-temporal interferometry" and can produce measures that can be widely used to identify which are the infrastructures that are affected by out of normal movements.

At the current state of art, the ground motion maps obtained as output of the multi-temporal interferometry are visually examined by operators that decide on the basis of their acquired knowledge and their experience if a given area is worthy of field inspection of not. This type of approach can be complex, time-demanding and easily subject to errors. SAR data can be acquired with a global coverage 24/7 and under any weather condition. Hence, remotely-sensed monitoring of territories and infrastructure displacements produces millions of measures over areas of few hundreds of square kilometres. As a consequence, making decisions over even localised portions of infrastructures or territory reveals to be a difficult task for which human interpretation shows evident limits.

OBJECTS AND SUMMARY OF THE INVENTION

The object of the present invention is, therefore, to provide a system that allows for detecting pre-critical remotely-sensed movements of territories and infrastructure, so to proceed with the field inspection only of those portions of infrastructures or territories that are in pre-critical status, giving the precedence to those that are in a higher concern situation.

To this aim the system of the present invention comprises an arithmetic device configured to process the multi-temporal interferometry ground motion maps by dividing them into areas and calculating a score indicative of the criticality of the situation for each of said areas and, therefore, of their priority of inspection. In this way, the arithmetic device can, then, rank the areas on the basis of their indices and, automatically, classify them in risk classes by using a neural network algorithm.

More particularly, the above-mentioned arithmetic device is configured to execute:

- processing of importing displacement measurement data derived from multi-temporal interferometry measurements of satellite SAR data on the location of the objects to be monitored;
- processing of importing at least one information data record about the objects, said information data being selected from the group consisting of: location, geometry, material, size, age, topology, function, past failures, service levels, traffic data, geology, geomorphology, digital elevation model, slope and aspect;
- processing of subdividing the objects into a plurality of elementary units, each of said unit comprising a plurality of persistent scatterers and/or distributed scatterers;
- calculating a coherence value for each of the persistent scatterers and/or distributed scatterers;

- calculating a first quantity value for each of the persistent scatterers and/or distributed scatterers, said first quantity being dependent on the coherence value;
- processing of selecting the scatterers having a first quantity value above a fixed threshold, thus obtaining a set of selected scatterers for each elementary unit;
- calculating at least a score for each elementary unit;
- processing of determining the priority of inspection of each unit based on the score; and
- processing of displaying information on the score of each unit and/or a result of the determining of the priority of inspection on an output device.

For the sake of the present description and, as known in the field, the "persistent scatterers", or PS, are single scatterers on the ground showing high temporal phase stability in the entire data stack and that are minimally affected by temporal and geometrical decorrelation.

The "distributed scatterers", o DS, are, instead, groups of different small scatterers on the ground showing constant reflection over time, with moderate coherence and medium-to-low signal-to-noise ratio, due to temporal and spatial decorrelation. More particularly, the persistent scatterers correspond to artificial or natural elements existing on the Earth's surface, e.g., buildings, monuments, roadways, railways, antennas, electric towers or rocks, debris slopes. Their return signal (backscatter) is characterized by high stability over time. The radar can measure the distance between the sensor and the target every time it flies over it.

While the persistent scatterers have a high signal-to-noise ratio, the distributed scatterers have a medium-to-low signal-to-noise ratio. To be considered as a unique target, they have to be numerous and close to each other, and they have to exhibit the same backscatter signal.

Preferably, the interimage coherence can be calculated, as not limiting example, as the sum over the images of the residual between actual and modelled phase trends, the model phase being the sum of all the contributions due to APS (Atmospheric Phase Screen), DEM (Digital Elevetion Model) error, and displacement. [Bovenga, Fabio & Refice, Alberto & Nutricato, Raffaele & Guerriero, Luciano & Chiaradia, Mt. (2005). SPINUA: a flexible processing chain for ERS/ENVISAT long term interferometry. Proceedings of ESA-ENVISAT Symposium, Salzburg, Austria. 6-10]. Hence, the coherence is, directly connected to persistent and distributed scatterers quality: the higher the coherence, the lower the uncertainty of the measured backscatter signal. For this reason and as further detailed below, the coherence value for each of the persistent scatterers and/or distributed scatterers was processed to obtain a normalized value of the same and used for selecting only the scatterers having high signal reliability.

The calculating the score comprises:

- calculating at least a second quantity dependent on the displacement for each selected scatterer so as to obtain a second quantity value for each selected scatterer;
- calculating, for each unit, a mean of the second quantity value of the selected scatterers inside the unit, so as to obtain a second quantity mean for each unit;
- calculating a maximum value of the second quantity means of the units, thus obtaining a second quantity mean maximum; and
- dividing the second quantity mean of each unit by the second quantity mean maximum, thus obtaining the score.

Alternatively, the calculating the score can comprise:

- calculating, for each unit, the second quantity difference between the second quantity value of each selected scatterer inside the unit and the second quantity mean of the unit, so as to obtain a value for each selected scatterer;
- calculating, for each unit, a mean of the second quantity difference values among the selected scatterers inside the unit, so as to obtain a second quantity difference mean for each unit;
- calculating a maximum value of the second quantity difference mean of the units, thus obtaining a second quantity difference mean maximum;
- dividing the second quantity difference mean of each unit by second quantity difference mean maximum, thus obtaining a second quantity difference ratio;
- calculating a maximum value of the second quantity means of the units, thus obtaining a second quantity mean maximum;
- dividing the second quantity mean of each unit by the second quantity mean maximum, thus obtaining a second quantity ratio;
- summing the second quantity ratio and the second quantity difference ratio, thus obtaining a sum value; and
- calculating a ratio between the sum value of the unit and the maximum value of the sum value among the elementary units, thus obtaining the score of the unit.

The processing of determining the priority of inspection of each unit based on the score can comprise ranking the scores of the units and/or classifying the units based on the scores in one of the following risk classes:

- high risk, if the score is higher than an upper score threshold;
- intermediate risk, if the score is comprised between a lower score threshold and the upper score threshold; and
- low risk, if the score is lower than the lower score threshold.

The displaying information can, thus, comprise displaying the scores and/or the risk classes of each unit. Color mapping of the scores or the risk classes of each unit on satellite images of the object can also be part of the displaying information.

The proposed score can be calculated for the displacement measurements derived from multi-temporal interferometry measurements of satellite SAR data acquired in both ascending and descending mode. In this case, i.e. when data of both types of acquiring mode are employed, the calculating the score, described above, can be replicated for ascending mode and descending mode data, so as to obtain for each unit, a first score, resulting from SAR data acquired in ascending mode, and a second score, resulting from SAR data acquired in descending mode. The calculating the score, therefore, will further comprise:

- comparing, for each unit, the first score and the second score;
- calculating, for each unit, a final score, the final score being equal to the first score, if the first score is higher than the second score, and to the second score, if the second score is higher than the first score.

The processing of determining the priority of inspection of each unit will be based on the final score and comprise ranking the final scores of the units and/or classifying the units based on the final scores in one of the following risk classes:

- high risk, if the final score is higher than a upper final score threshold;
- intermediate risk, if the final score is comprised between a lower final score threshold and the upper final score threshold; and
- low risk, if the final score is lower than the lower final score threshold.

Consequently, the displaying information will comprise displaying the final scores and/or the risk classes of each unit. Color mapping the final scores or the risk classes of each unit on satellite images of the object will also be part of the displaying information.

A second object of the present invention is, then, to provide a method that allows for detecting pre-critical remotely-sensed movements of territories and infrastructure, so to proceed with the field inspection only of those portions of infrastructures or territories that are in pre-critical status, giving the precedence to those that are in a higher concern situation.

Such a method comprises:

- importing displacement measurement data derived from multi-temporal interferometry measurement of satellite SAR data over the objects to be monitored;

- importing at least one information data record about the objects, said information data being selected from the group consisting of: location, geometry, material, size, age, topology, function, past failures, service levels, traffic data, geology, geomorphology, digital elevation model, slope and aspect;
- subdividing the objects into a plurality of elementary units, each of said unit comprising a plurality of persistent scatterers and/or distributed scatterers;
- calculating a coherence value for each of the persistent scatterers and/or distributed scatterers;
- calculating a first quantity value for each of the persistent scatterers and/or distributed scatterers, said first quantity being dependent on the coherence value;
- selecting the scatterers having a first quantity value above a fixed threshold, thus obtaining a set of selected scatterers for each elementary unit;
- calculating at least a score for each elementary unit;
- determining the priority of inspection of each unit based on the score; and
- displaying information on the score of each unit and/or a result of the determining of the priority of inspection.

The step of calculating the score comprises:

- calculating at least a second quantity dependent on the displacement for each selected point so as to obtain a second quantity value for each selected point;
- calculating, for each unit, a mean of the second quantity value of the selected scatterers inside the unit, so as to obtain a second quantity mean for each unit;
- calculating a maximum value of the second quantity means of the units, thus obtaining a second quantity mean maximum; and
- dividing the second quantity mean of each unit by the second quantity mean maximum, thus obtaining the score;

Alternatively, the step of calculating the score can comprise:

- calculating, for each unit, the second quantity difference between the second quantity value of each selected point inside the unit and the second quantity mean of the unit, so as to obtain a second quantity difference value for each selected point;
- calculating, for each unit, a mean of the second quantity difference values among the selected scatterers inside the unit, so as to obtain a second quantity difference mean for each unit;
- calculating a maximum value of the second quantity difference mean of the units, thus obtaining a second quantity difference mean maximum;
- dividing the second quantity difference mean of each unit by second quantity difference mean maximum, thus obtaining a second quantity difference ratio;

- calculating a maximum value of the second quantity means of the units, thus obtaining a second quantity mean maximum;
- dividing the second quantity mean of each unit by the second quantity mean maximum, thus obtaining a second quantity ratio;
- summing the second quantity ratio and the second quantity difference ratio, thus obtaining a sum value; and
- calculating a ratio between the sum value of the unit and the maximum value of the sum value among the elementary units, thus obtaining the score of the unit.

As previously mentioned about the system that is the subject of the present invention, the processing of determining the priority of inspection of each unit based on the score comprise ranking the scores of the units and/or classifying the units assigning to them risk classes based on the scores and the displaying information can comprise displaying and or color mapping the scores and/or the risk classes of each unit. When data of both types of acquiring mode are employed, the calculating the score, described above, can be replicated for ascending mode and descending mode data, so as to obtain for each unit, a first score, resulting from SAR data acquired in ascending mode, and a second score, resulting from SAR data acquired in descending mode. The calculating the score, therefore, will further comprise:

- comparing, for each unit, the first score and the second score;
- calculating, for each unit, a final score, the final score being equal to the first score, if the first score is higher than the second score, and to the second score, if the second score is higher than the first score.

In this case, the step of processing of determining the priority of inspection of each unit based on the score comprise ranking the final scores of the units and/or classifying the units based on the final scores and the step of displaying information can comprise displaying and or color mapping the final scores and/or the risk classes of each unit. These and further features of the present invention will be made clearer by the reading the following detailed description, relating to some preferred embodiments of the present invention, to be considered by way of a non-limiting example of the more general concepts claimed.

BRIEF DESCRIPTION OF THE DRAWINGS

The following description refers to the accompanying drawings, in which:

- Figure 1 is a very high-resolution satellite image showing a linear infrastructure on which the elementary units are shown as superimposed to said image;

- Figure 2 is a very high-resolution satellite image showing a point infrastructure on which the elementary units are shown as superimposed to said image;
- Figure 3 is a very high-resolution satellite image showing a polygonal infrastructure on which the elementary units are shown as superimposed to said image; and
- Figure 4 is a very high-resolution image of a territory on which the elementary units are shown as superimposed to said image.

DETAILED DESCRIPTION OF THE INVENTION

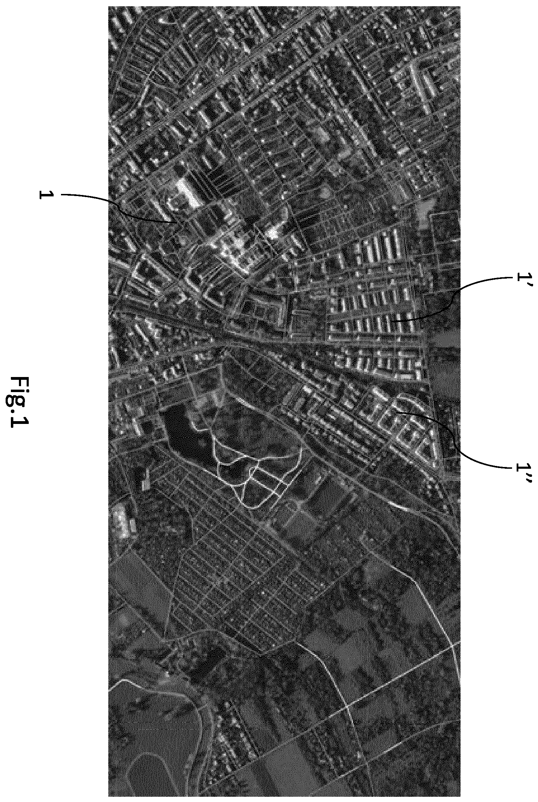

Referring to Figure 1, a first embodiment of the system of the present invention is specifically designed for determining the priority of inspection of the portions of a linear infrastructure (e.g. water networks, sewer networks, roadways, railways, etc.). The first embodiment of the system of the present invention comprising an arithmetic device that is configured to execute:

- processing of importing displacement measurement data derived from multi-temporal interferometry measurements of satellite SAR data over the linear infrastructure to be monitored;
- processing of importing at least one information data record about the linear infrastructure, said information data being selected from the group consisting of: location, geometry, material, size, age, topology, function, past failures, service levels, traffic data;
- processing of subdividing the linear infrastructure into a plurality of elementary units (1, 1', 1"), each of said unit (1, 1', 1") comprising a plurality of persistent scatterers and/or distributed scatterers;
- calculating a coherence value for each of the persistent scatterers and/or distributed scatterers; and
- calculating a normalized coherence (NC) value for each of the persistent scatterers and/or distributed scatterers.

An elementary unit (1, 1', 1") is defined as is an area surrounding a segment of the infrastructure, the segment having a length comprised between 90 m and 110 and the area comprising all the scatterers having a linear distance from that segment comprised between 90 m or 110 m, or comprised between 10 m and 30 m.

If the coherence of that scatterer is higher than a coherence threshold (SC), the normalized coherence (NC) of a scatterer is given by the following equation:

$$NC = 0.5 + 0.5 * \frac{Coh - SC}{1 - SC}$$

where *Coh* is the coherence value of the scatterer and SC is the coherence threshold. If the coherence of that scatterer is lower than the coherence threshold (*SC*) and is different from the minimum coherence (*Coh*$_{min}$) of the

scatterers inside the unit (1,1', 1"), the normalized coherence (NC) is given, instead, by the following equation:

$$NC = 0.5 + 0.5 * \frac{SC - Coh}{SC - Coh_{min}}$$

where $Coh_{min}$ is the minimum coherence of the scatterers inside the unit (1,1',1").

If the coherence value of that scatterer is zero, the normalized coherence (NC) is, then, given by the following equation:

$$NC = 0$$

Finally, if the coherence of that scatterer is equal to the coherence threshold (SC), the normalized coherence (NC) is, then, given by the following equation:

$$NC = 0.5$$

As known, the coherence threshold (SC) is computed by the multi-temporal interferometry analysis as the value obtained with a Monte Carlo simulation.

The arithmetic device is further configured to execute:

- processing of selecting the scatterers having a normalized coherence above a fixed threshold comprised between 0.4 and 0.6, thus obtaining a set of selected scatterers for each elementary unit (1, 1', 1");
- calculating at least a score for each elementary unit (1, 1', 1");
- processing of determining the priority of inspection of each unit (1, 1', 1") based on the score; and
- processing of displaying information on the score of each unit (1, 1', 1") and/or a result of the determining of the priority of inspection on an output device.

The calculating at least a score for each elementary unit (1, 1', 1") comprises:

- calculating the velocity of each selected scatterer;
- calculating, for each unit (1, 1', 1"), a mean of the velocity selected scatterers inside the unit (1, 1', 1"), so as to obtain a velocity mean for each unit (1,1',1");
- calculating, for each unit (1, 1', 1"), the difference between the velocity of each selected scatterer inside the unit (1, 1', 1") and the velocity mean of the unit (1, 1', 1"), so as to obtain a velocity difference value for each selected scatterer;
- calculating, for each unit (1, 1', 1"), a mean of the velocity difference values among the selected scatterers inside the unit (1, 1', 1"), so as to obtain a velocity difference mean for each unit (1, 1', 1");

- calculating a maximum value of the velocity difference mean of the units (1,1',1"), thus obtaining a velocity difference mean maximum;
- dividing the velocity difference mean of each unit (1, 1', 1") by velocity difference mean maximum, thus obtaining a velocity difference ratio;
- calculating a maximum value of the velocity means of the units (1,1',1"), thus obtaining a velocity mean maximum;
- dividing the velocity mean of each unit (1,1',1") by the velocity mean maximum, thus obtaining a velocity ratio;
- summing the velocity ratio and the velocity difference ratio, thus obtaining a sum value; and
- calculating a ratio between the sum value of the unit (1,1',1") and the maximum value of the sum value among the elementary units (1,1',1"), thus obtaining the score of the unit (1,1',1").

Alternatively to the velocity, other quantities can be used. For example, it can be used the product of the velocity of a given scatterer and the density of the selected scatterers inside the elementary unit (1,1',1") containing that scatterer.

Moreover, and preferably, the number of the considered scatterers can be further reduced by excluding among the selected scatterers those having a velocity exceeding the velocity mean in that unit (1, 1', 1") of a given velocity threshold.

The processing of determining the priority of inspection of each unit (1, 1', 1") based on the score comprises ranking the scores of the units (1,1',1").

In addition, or alternatively, the processing of determining the priority of inspection can comprise classifying the units (1, 1', 1") based on the scores in one of the following risk classes:

- high risk, if the score is higher than an upper score threshold;
- intermediate risk, if the score is comprised between a lower score threshold and the upper score threshold; and
- low risk, if the score is lower than the lower score threshold.

The arithmetic device can execute the step of classifying by means of a neural network algorithm using the scores of the units (1, 1', 1") as inputs, the scores of the units (1, 1', 1") being calculated using the velocities or the scatterers and/or the product of the velocities of the scatterers per the density of the scatterers inside the unit (1, 1', 1"). Even the acceleration of the scatterers can be used as quantity on which calculate the scores. In this case, the calculating at least a score for each elementary unit (1, 1', 1") comprises:

- calculating the acceleration of each selected scatterer;

- calculating, for each unit (1, 1', 1"), a mean of the acceleration selected scatterers inside the unit (1, 1', 1"), so as to obtain an acceleration mean for each unit (1, 1', 1");
- calculating, for each unit (1,1',1"), the difference between the acceleration of each selected scatterer inside the unit (1,1',1") and the acceleration mean of the unit (1,1',1"), so as to obtain an acceleration difference value for each selected scatterer;
- calculating, for each unit (1, 1', 1"), a mean of the acceleration difference values among the selected scatterers inside the unit (1, 1', 1"), so as to obtain an acceleration difference mean for each unit (1, 1', 1");
- calculating a maximum value of the acceleration difference mean of the units (1, 1', 1"), thus obtaining an acceleration difference mean maximum;
- dividing the acceleration difference mean of each unit (1, 1', 1") by acceleration difference mean maximum, thus obtaining an acceleration difference ratio;
- calculating a maximum value of the acceleration means of the units (1, 1', 1"), thus obtaining an acceleration mean maximum;
- dividing the acceleration mean of each unit (1, 1', 1") by the acceleration mean maximum, thus obtaining an acceleration ratio;
- summing the acceleration ratio and the acceleration difference ratio, thus obtaining a sum value; and
- calculating a ratio between the sum value of the unit (1, 1', 1") and the maximum value of the sum value among the elementary units (1,1',1"), thus obtaining the score of the unit (1, 1', 1").

The scores obtained by using acceleration can be used alone in the processing of determining the priority of inspection or in combination with the scores obtained by using the velocity and/or the scores obtained by using the product between the density and the velocity.

In the first case, the processing of determining the priority of inspection of each unit (1, 1', 1") based on the score comprises ranking the scores of the units (1, 1', 1") and classifying the units (1, 1', 1"), said scores being calculated on the basis of the acceleration.

In the second case, the processing of determining the priority of inspection comprises comparing, for each unit (1, 1', 1"), the score obtained by using the acceleration, the score calculated on the basis of the velocity and the score obtained by using the product of the density and the velocity.

For each unit (1, 1', 1"), a final score, is then selected as the score that is greater among the three calculated scores (acceleration, velocity, product of density and velocity, density per acceleration) and the ranking is performed on the final score. Moreover, also a fourth type of scores on the basis the product of the density and the acceleration can be calculated and compared with the others.

The arithmetic device can, therefore, execute the step of classifying by means of a neural network algorithm using simultaneously all the types of scores as inputs.

Moreover, as previously mentioned, all the proposed scores (based on velocity, product of density and velocity, acceleration and product of density and acceleration) can be calculated for the displacement measurements derived from multi-temporal interferometry measurements of satellite SAR data acquired in both ascending and descending mode.

When only one score per unit (1, 1', 1") was calculated because only one quantity was used, said quantity being chosen among velocity, acceleration, density per velocity and density per acceleration, the calculating the score can be replicated for ascending mode and descending mode data, so as to obtain for each unit (1, 1', 1"), a first score, resulting from SAR data acquired in ascending mode, and a second score, resulting from SAR data acquired in descending mode. The calculating the score, therefore, will further comprise:

- comparing, for each unit (1, 1', 1"), the first score and the second score;
- calculating, for each unit (1, 1', 1"), a final score, the final score being equal to the first score, if the first score is higher than the second score, and to the second score, if the second score is higher than the first score.

When more than one score per unit (1, 1', 1") was calculated, because at least two quantities were used, said quantities being chosen among velocity, acceleration, density per velocity and density per acceleration, the calculating the score can be replicated for ascending mode and descending mode data, so as to obtain for each unit (1, 1', 1") and for each quantity, a first score, resulting from SAR data acquired in ascending mode and being calculated on the basis of said quantity, said quantity being chosen among velocity, acceleration, density per velocity and density per acceleration, and a second score, resulting from SAR data acquired in descending mode and being calculated on the basis of said quantity. The calculating the score, therefore, will further comprise:

- comparing, for each unit (1,1',1"), the first score and the second score; and

- calculating, for each unit, a partial final score relative to said quantity, the partial final score being equal to the first score, if the first score is higher than the second score, and to the second score, if the second score is higher than the first score.

The partial final scores calculated for all the used quantities have, then, to be compared so as obtaining a total final score. To this aim, the latter is calculated as the higher partial final scores.

Finally, in all the situations described above, the arithmetic device is further configured to execute processing of displaying information on the score and/or the risk classes of each unit (1, 1', 1"). The displaying information can comprise also the color mapping the scores and/or the risk classes of each unit (1, 1', 1") on satellite images of the linear infrastructure.

Referring to Figure 1, a first embodiment of the method of the present invention, is designed for determining the priority of inspection of the portions of a linear infrastructure (e.g. water networks, sewer networks, roadways, railways, and comprises all the steps executed by the arithmetic device of the first embodiment of the system of the present invention.

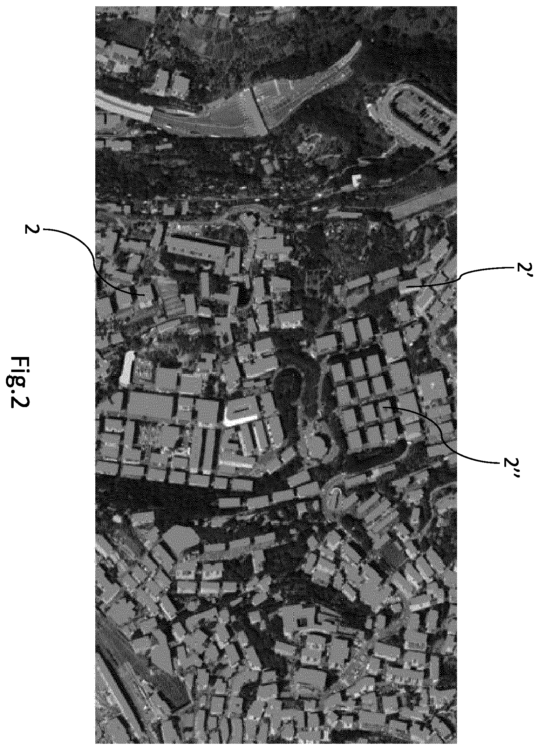

Referring to Figure 2, a second embodiment of the system of the present invention is specifically designed for determining the priority of inspection of the portions of a polygonal infrastructure (e.g. buildings, settling tanks of wastewater of a treatment plant, etc.).

The second embodiment of the system of the present invention comprising an arithmetic device that is configured to execute:

- processing of importing displacement measurement data derived from multi-temporal interferometry measurements of satellite SAR data over the polygonal infrastructure to be monitored;
- processing of importing at least one information data record about the polygonal infrastructure, said information data being selected from the group consisting of: location, geometry, material, size, age, topology, function, geology, geomorphology, digital elevation model, slope and aspect;
- processing of subdividing the polygonal infrastructure into a plurality of elementary units (2, 2', 2"), each of said unit (2, 2', 2") comprising a plurality of persistent scatterers and/or distributed scatterers;
- calculating a coherence value for each of the persistent scatterers and/or distributed scatterers; and
- calculating a normalized coherence (NC) value for each of the persistent scatterers and/or distributed scatterers.

An elementary unit (2,2',2") is defined as is an area surrounding a polygon of the infrastructure, the area comprising all the scatterers having a linear distance from that segment comprised between 90 m or 110 m, or comprised between 10 m and 30 m.

If the coherence of that scatterer is higher than a coherence threshold (SC), the normalized coherence (NC) of a scatterer is given by the following equation:

$$NC = 0.5 + 0.5 * \frac{Coh - SC}{1 - SC}$$

where Coh is the coherence value of the scatterer and SC is the coherence threshold. If the coherence of that scatterer is lower than the coherence threshold (SC) and is different from the minimum coherence ($Coh_{min}$) of the scatterers inside the unit (2,2', 2"), the normalized coherence (NC) is given, instead, by the following equation:

$$NC = 0.5 + 0.5 * \frac{SC - Coh}{SC - Coh_{min}}$$

where $Coh_{min}$ is the minimum coherence of the scatterers inside the unit (2,2',2").

If the coherence value of that scatterer is zero, the normalized coherence (NC) is, then, given by the following equation:

$$NC = 0$$

Finally, if the coherence of that scatterer is equal to the coherence threshold (SC), the normalized coherence (NC) is, then, given by the following equation:

$$NC = 0.5$$

The coherence threshold (SC) is computed by the multi-temporal interferometry analysis as the value obtained with a Monte Carlo simulation.

The arithmetic device that is further configured to execute:

- processing of selecting the scatterers having a normalized coherence above a fixed threshold comprised between 0.4 and 0.6, thus obtaining a set of selected scatterers for each elementary unit (2,2',2");
- calculating at least a score for each elementary unit (2, 2', 2");
- processing of determining the priority of inspection of each unit (2, 2', 2") based on the score; and
- processing of displaying information on the score of each unit (2,2',2") and/or a result of the determining of the priority of inspection on an output device.

The calculating at least a score for each elementary unit (2, 2', 2") comprises:

- calculating the velocity of each selected scatterer;
- calculating, for each unit (2, 2', 2"), a mean of the velocity selected scatterers inside the unit (2, 2', 2"), so as to obtain a velocity mean for each unit (2, 2', 2");
- calculating, for each unit (2, 2', 2"), the difference between the velocity of each selected scatterer inside the unit (2, 2', 2") and the velocity mean of the unit (2,2',2"), so as to obtain a velocity difference value for each selected scatterer;
- calculating, for each unit (2,2',2"), a mean of the velocity difference values among the selected scatterers inside the unit (2, 2', 2"), so as to obtain a velocity difference mean for each unit (2,2',2");

- calculating a maximum value of the velocity difference mean of the units (2, 2', 2"), thus obtaining a velocity difference mean maximum;
- dividing the velocity difference mean of each unit (2, 2', 2") by velocity difference mean maximum, thus obtaining a velocity difference ratio;
- calculating a maximum value of the velocity means of the units (2,2',2"), thus obtaining a velocity mean maximum;
- dividing the velocity mean of each unit (2, 2', 2") by the velocity mean maximum, thus obtaining a velocity ratio;
- summing the velocity ratio and the velocity difference ratio, thus obtaining a sum value; and - calculating a ratio between the sum value of the unit (2,2',2") and the maximum value of the sum value among the elementary units (2,2',2"), thus obtaining the score of the unit (2,2',2").

Alternatively to the velocity, other quantities can be used. For example, the acceleration of the scatterers can be used as quantity, on the basis of which calculate the scores. In this case, the calculating at least a score for each elementary unit (2, 2', 2") comprises:

- calculating the acceleration of each selected scatterer;
- calculating, for each unit (2, 2', 2"), a mean of the acceleration selected scatterers inside the unit (2,2',2"), so as to obtain an acceleration mean for each unit (2,2',2");
- calculating, for each unit (2,2',2"), the difference between the acceleration of each selected scatterer inside the unit (2,2',2") and the acceleration mean of the unit (2,2',2"), so as to obtain an acceleration difference value for each selected scatterer;
- calculating, for each unit (2,2',2"), a mean of the acceleration difference values among the selected scatterers inside the unit (2,2',2"), so as to obtain an acceleration difference mean for each unit (2,2',2");
- calculating a maximum value of the acceleration difference mean of the units (2,2',2"), thus obtaining an acceleration difference mean maximum;
- dividing the acceleration difference mean of each unit (2, 2',2") by acceleration difference mean maximum, thus obtaining an acceleration difference ratio;
- calculating a maximum value of the acceleration means of the units (2, 2',2"), thus obtaining an acceleration mean maximum;
- dividing the acceleration mean of each unit (2, 2', 2") by the acceleration mean maximum, thus obtaining an acceleration ratio;
- summing the acceleration ratio and the acceleration difference ratio, thus obtaining a sum value; and
- calculating a ratio between the sum value of the unit (2,2',2") and the maximum value of the sum value among the elementary units (2, 2', 2"), thus obtaining the score of the unit (2,2',2").

The scores obtained using the acceleration can be used alone in the processing of determining the priority of inspection or in combination with the scores obtained by using the velocity.

In the first case, the processing of determining the priority of inspection of each unit (2,2',2") based on the score comprises ranking the scores of the units (2, 2', 2") and classifying the units (2, 2', 2"), said scores being calculated on the basis of the acceleration.

In the second case, the processing of determining the priority of inspection comprises comparing, for each unit (2,2',2"), the score obtained by using the acceleration and the score calculated on the basis of the velocity.

For each unit (2,2',2"), a final score, is then selected as the score that is greater among the three calculated scores (acceleration, velocity) and the ranking is performed on the final score.

The arithmetic device can, therefore, execute the step of classifying by means of a neural network algorithm using simultaneously all the types of scores as inputs.

Moreover, as previously mentioned, all the proposed scores (based on velocity and acceleration) can be calculated for the displacement measurements derived from multi-temporal interferometry measurements of satellite SAR data acquired in both ascending and descending mode.

When only one score per unit (2, 2', 2") was calculated because only one quantity was used, said quantity being chosen among velocity and acceleration, the calculating the score can be replicated for ascending mode and descending mode data, so as to obtain for each unit (2, 2', 2"), a first score, resulting from SAR data acquired in ascending mode, and a second score, resulting from SAR data acquired in descending mode. The calculating the score, therefore, will further comprise:

- comparing, for each unit (2,2',2"), the first score and the second score;
- calculating, for each unit (2, 2', 2"), a final score, the final score being equal to the first score, if the first score is higher than the second score, and to the second score, if the second score is higher than the first score.

When more than one score per unit (2, 2', 2") was calculated, because at least two quantities were used, said quantities being chosen among velocity and acceleration, the calculating the score can be replicated for ascending mode and descending mode data, so as to obtain for each unit (2, 2', 2") and for each quantity, a first score, resulting from SAR data acquired in ascending mode and being calculated on the basis of said quantity, said quantity being chosen among velocity and acceleration and a second score, resulting from SAR data acquired in descending mode and being calculated on the basis of said quantity. The calculating the score, therefore, will further comprise:

- comparing, for each unit (2, 2', 2"), the first score and the second score; and

- calculating, for each unit (2,2',2"), a partial final score relative to said quantity, the partial final score being equal to the first score, if the first score is higher than the second score, and to the second score, if the second score is higher than the first score.

The partial final scores calculated for all the used quantities have, then, to be compared so as obtaining a total final score. To this aim, the latter is calculated as the higher partial final scores.

Finally, in all the situations described above, the arithmetic device is further configured to execute processing of displaying information on the score and/or on the risk classes of each unit (2, 2', 2"). The displaying information can comprise also the color mapping of the scores and/or of the risk classes of each unit (2, 2', 2") on satellite images of the polygonal infrastructure.

Referring to Figure 2, a second embodiment of the method of the present invention, is designed for determining the priority of inspection of the portions of a polygonal infrastructure (e.g. buildings, settling tanks of wastewater of a treatment plant, etc.) and comprises all the steps executed by the arithmetic device of the second embodiment of the system of the present invention.

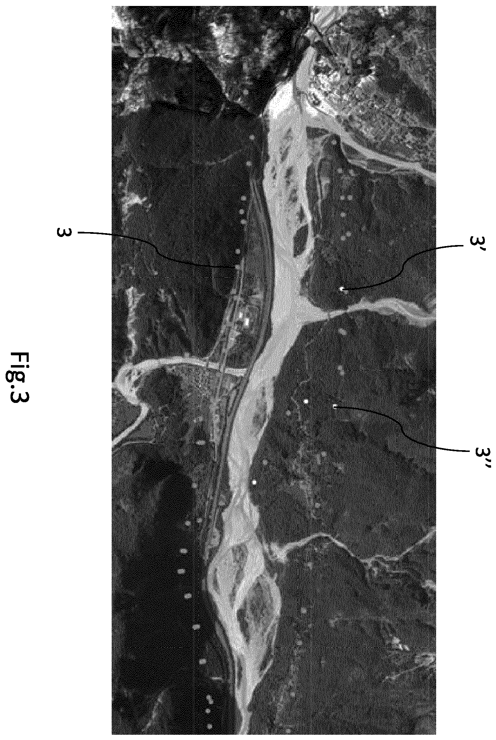

Referring to Figure 3, a third embodiment of the system of the present invention is specifically designed for determining the priority of inspection of the portions of a point infrastructure (e.g. electrical towers, etc.).

The third embodiment of the system of the present invention comprising an arithmetic device that is configured to execute:

- processing of importing displacement measurement data derived from multi-temporal interferometry measurements of satellite SAR data over the point infrastructure to be monitored;

- processing of importing at least one information data record about the point infrastructure, said information data being selected from the group consisting of: location, geometry, material, size, age, topology, function, past failures, service levels, geology, geomorphology, digital elevation model, slope and aspect;

- processing of subdividing the point infrastructure into a plurality of elementary units (3,3',3"), each of said unit (3, 3', 3") comprising a plurality of persistent scatterers and/or distributed scatterers;

- calculating a coherence value for each of the persistent scatterers and/or distributed scatterers; and

- calculating a normalized coherence (NC) value for each of the persistent scatterers and/or distributed scatterers.

An elementary unit (3, 3', 3") is defined as circular area centred in a point of the infrastructure, the area having a radius of length comprised between 90 m or 110 m, or comprised between 10 m and 30 m.

If the coherence of that scatterer is higher than a coherence threshold (SC), the normalized coherence (NC) of a scatterer is given by the following equation:

$$NC = 0.5 + 0.5 * \frac{Coh - SC}{1 - SC}$$

where Coh is the coherence value of the scatterer and SC is the coherence threshold. If the coherence of that scatterer is lower than the coherence threshold (SC) and is different from the minimum coherence ($Coh_{min}$) of the scatterers inside the unit (3,3', 3"), the normalized coherence (NC) is given, instead, by the following equation:

$$NC = 0.5 + 0.5 * \frac{SC - Coh}{SC - Coh_{min}}$$

where $Coh_{min}$ is the minimum coherence of the scatterers inside the unit (3,3',3").

If the coherence value of that scatterer is zero, the normalized coherence (NC) is, then, given by the following equation:

$$NC = 0$$

Finally, if the coherence of that scatterer is equal to the coherence threshold (SC), the normalized coherence (NC) is, then, given by the following equation:

$$NC = 0.5$$

The coherence threshold (SC) is computed by the multi-temporal interferometry analysis as the value obtained with a Monte Carlo simulation.

The arithmetic device that is further configured to execute:

- processing of selecting the scatterers having a normalized coherence above a fixed threshold comprised between 0.4 and 0.6, thus obtaining a set of selected scatterers for each elementary unit (3,3',3");

- calculating at least a score for each elementary unit (3,3',3");

- processing of determining the priority of inspection of each unit (3,3', 3") based on the score; and

- processing of displaying information on the score of each unit (3, 3', 3") and/or a result of the determining of the priority of inspection on an output device.

The calculating at least a score for each elementary unit (3, 3', 3") comprises:

- calculating the velocity of each selected scatterer;
- calculating, for each unit (3, 3', 3"), a mean of the velocity selected scatterers inside the unit (3, 3', 3"), so as to obtain a velocity mean for each unit (3, 3', 3");
- calculating, for each unit (3, 3', 3"), the difference between the velocity of each selected scatterer inside the unit (3, 3', 3") and the velocity mean of the unit (3,3',3"), so as to obtain a velocity difference value for each selected scatterer;
- calculating, for each unit (3, 3', 3"), a mean of the velocity difference values among the selected scatterers inside the unit (3, 3', 3"), so as to obtain a velocity difference mean for each unit (3, 3', 3");
- calculating a maximum value of the velocity difference mean of the units (3,3',3"), thus obtaining a velocity difference mean maximum;
- dividing the velocity difference mean of each unit (3, 3', 3") by velocity difference mean maximum, thus obtaining a velocity difference ratio;
- calculating a maximum value of the velocity means of the units (3, 3', 3"), thus obtaining a velocity mean maximum;
- dividing the velocity mean of each unit (3,3',3") by the velocity mean maximum, thus obtaining a velocity ratio;
- summing the velocity ratio and the velocity difference ratio, thus obtaining a sum value; and
- calculating a ratio between the sum value of the unit (3,3',3") and the maximum value of the sum value among the elementary units (3,3',3"), thus obtaining the score of the unit (3,3',3").

Alternatively to the velocity, other quantities can be used. For example, the acceleration of the scatterers can be used as quantity on which calculate the scores. In this case, the calculating at least a score for each elementary unit (3, 3', 3") comprises:

- calculating the acceleration of each selected scatterer;
- calculating, for each unit (3, 3', 3"), a mean of the acceleration selected scatterers inside the unit (3,3',3"), so as to obtain an acceleration mean for each unit (3, 3', 3");
- calculating, for each unit (3, 3', 3"), the difference between the acceleration of each selected scatterer inside the unit (3, 3', 3") and the acceleration mean of the unit (3, 3', 3"), so as to obtain an acceleration difference value for each selected scatterer;
- calculating, for each unit (3, 3', 3"), a mean of the acceleration difference values among the selected scatterers inside the unit (3, 3', 3"), so as to obtain a acceleration difference mean for each unit (3,3',3");
- calculating a maximum value of the acceleration difference mean of the units (3, 3', 3"), thus obtaining an acceleration difference mean maximum;
- dividing the acceleration difference mean of each unit (3,3',3") by acceleration difference mean maximum, thus obtaining an acceleration difference ratio;
- calculating a maximum value of the acceleration means of the units (3, 3', 3"), thus obtaining an acceleration mean maximum;
- dividing the acceleration mean of each unit (3, 3', 3") by the acceleration mean maximum, thus obtaining an acceleration ratio;
- summing the acceleration ratio and the acceleration difference ratio, thus obtaining a sum value; and
- calculating a ratio between the sum value of the unit (3, 3', 3") and the maximum value of the sum value among the elementary units (3, 3', 3"), thus obtaining the score of the unit (3, 3', 3").

The scores obtained using the acceleration can be used alone in the processing of determining the priority of inspection or in combination with the scores obtained by using the velocity.

In the first case, the processing of determining the priority of inspection of each unit (3, 3', 3") based on the score comprises ranking the scores of the units (3, 3', 3") and classifying the units (3, 3', 3"), said scores being calculated on the basis of the acceleration.

In the second case, the processing of determining the priority of inspection comprises comparing, for each unit (3,3',3"), the score obtained by using the acceleration and the score calculated on the basis of the velocity.

For each unit (3,3',3"), a final score, is then selected as the score that is greater among the two calculated scores (acceleration, velocity) and the ranking is performed on the final score.

The arithmetic device can, therefore, execute the step of classifying by means of a neural network algorithm using simultaneously all the types of scores as inputs.

Moreover, as previously mentioned, all the proposed scores (based on velocity and acceleration) can be calculated for the displacement measurements derived from multi-temporal interferometry measurements of satellite SAR data acquired in both ascending and descending mode.

When only one score per unit (3,3',3") was calculated because only one quantity was used, said quantity being chosen among velocity and acceleration, the calculating the score can be replicated for ascending mode and descending mode data, so as to obtain for each unit (3, 3', 3"), a first score, resulting from SAR data acquired in ascending mode, and a second score, resulting from SAR data acquired in descending mode. The calculating the score, therefore, will further comprise:

- comparing, for each unit (3, 3', 3"), the first score and the second score;
- calculating, for each unit (3, 3', 3"), a final score, the final score being equal to the first score, if the first score is higher than the second score, and to the second score, if the second score is higher than the first score.

When more than one score per unit (3, 3', 3") was calculated, because at least two quantities were used, said quantities being chosen among velocity and acceleration, the calculating the score can be replicated for ascending mode and descending mode data, so as to obtain for each unit (3,3',3") and for each quantity, a first score, resulting from SAR data acquired in ascending mode and being calculated on the basis of said quantity, said quantity being chosen among velocity and acceleration and a second score, resulting from SAR data acquired in descending mode and being calculated on the basis of said quantity. The calculating the score, therefore, will further comprise:

- comparing, for each unit (3,3',3"), the first score and the second score; and

- calculating, for each unit (3,3',3"), a partial final score relative to said quantity, the partial final score being equal to the first score, if the first score is higher than the second score, and to the second score, if the second score is higher than the first score.

The partial final scores calculated for all the used quantities have, then, to be compared so as obtaining a total final score. To this aim, the latter is calculated as the higher partial final scores.

Finally, in all the situations described above, the arithmetic device is further configured to execute processing of displaying information on the score and/or the risk classes of each unit (3, 3', 3"). The displaying information can comprise also the color mapping of the scores and/or of the risk classes of each unit (3, 3', 3") on satellite images of the point infrastructure.

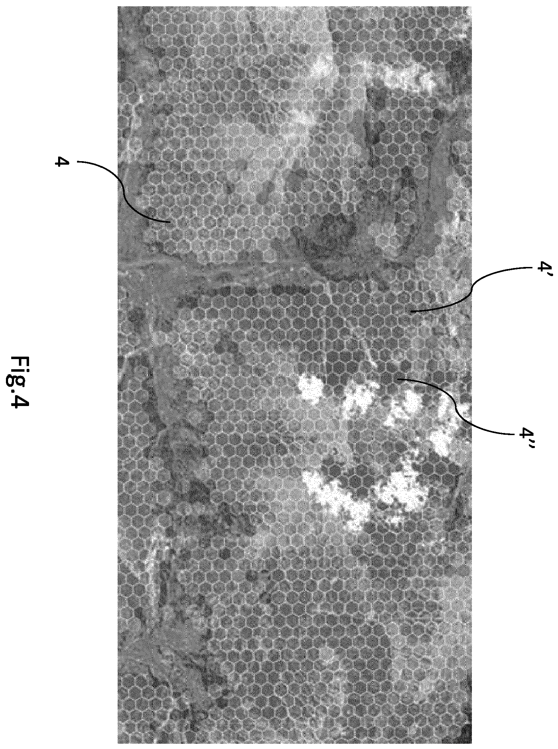

Referring to Figure 3, a third embodiment of the method of the present invention, is designed for determining the priority of inspection of the portions of a point infrastructure (e.g. electrical towers, etc.) and comprises all the steps executed by the arithmetic device of the third embodiment of the system of the present invention. Referring to Figure 4, a fourth embodiment of the method of the present invention is specifically designed for determining the priority of inspection of the portions of a territory.

The fourth embodiment of the system of the present invention comprising an arithmetic device that is configured to execute:

- processing of importing displacement measurement data derived from multi-temporal interferometry measurements of satellite SAR data over the territory to be monitored;

- processing of importing at least one information data record about the territory, said information data being selected from the group consisting of: location, geometry, geology, geomorphology, digital elevation model, slope and aspect;

- processing of subdividing the territory into a plurality of elementary units (4, 4', 4"), each of said unit (4, 4', 4") comprising a plurality of persistent scatterers and/or distributed scatterers;

- calculating a coherence value for each of the persistent scatterers and/or distributed scatterers; and

- calculating a normalized coherence (NC) value for each of the persistent scatterers and/or distributed scatterers.

An elementary unit (4,4', 4") is defined as a circular shaped or polygonal shaped (e.g. square-shaped or hexagon-shaped) area, the plurality of the elementary units (4,4', 4") forming a grid covering the territory. The size and placement of each area are defined using horizontal and vertical spacing, both ranging between 30 and 300 m.

If the coherence of that scatterer is higher than a coherence threshold (SC), the normalized coherence (NC) of a scatterer is given by the following equation:

$$NC = 0.5 + 0.5 * \frac{Coh - SC}{1 - SC}$$

where Coh is the coherence value of the scatterer and SC is the coherence threshold. If the coherence of that scatterer is lower than the coherence threshold (SC) and is different from the minimum coherence ($Coh_{min}$) of the scatterers inside the unit (4,4', 4"), the normalized coherence (NC) is given, instead, by the following equation:

$$NC = 0.5 + 0.5 * \frac{SC - Coh}{SC - Coh_{min}}$$

where $Coh_{min}$ is the minimum coherence of the scatterers inside the unit (4,4',4").

If the coherence value of that scatterer is zero, the normalized coherence (NC) is, then, given by the following equation:

$$NC = 0$$

Finally, if the coherence of that scatterer is equal to the coherence threshold (SC), the normalized coherence (NC) is, then, given by the following equation:

$$NC = 0.5$$

The coherence threshold (SC) is computed by the multi-temporal interferometry analysis as the value obtained with a Monte Carlo simulation.

The arithmetic device that is further configured to execute:

- processing of selecting the scatterers having a normalized coherence above a fixed threshold comprised between 0.4 and 0.6, thus obtaining a set of selected scatterers for each elementary unit (4, 4', 4");
- calculating at least a score for each elementary unit (4,4',4");
- processing of determining the priority of inspection of each unit (4,4', 4") based on the score; and
- processing of displaying information on the score of each unit (4,4',4") and/or a result of the determining of the priority of inspection on an output device.

The calculating at least a score for each elementary unit (4,4',4") comprises:

- calculating the velocity of each selected scatterer;
- calculating, for each unit (4, 4', 4"), a mean of the velocity selected scatterers inside the unit (4,4',4"), so as to obtain a velocity mean for each unit (4, 4', 4");
- calculating, for each unit (4, 4', 4"), the difference between the velocity of each selected scatterer inside the unit (4,4',4") and the velocity mean of the unit (4,4',4"), so as to obtain a velocity difference value for each selected scatterer;
- calculating, for each unit (4, 4', 4"), a mean of the velocity difference values among the selected scatterers inside the unit (4, 4', 4"), so as to obtain a velocity difference mean for each unit (4,4',4");
- calculating a maximum value of the velocity difference mean of the units (4,4',4"), thus obtaining a velocity difference mean maximum;
- dividing the velocity difference mean of each unit (4, 4', 4") by velocity difference mean maximum, thus obtaining a velocity difference ratio;
- calculating a maximum value of the velocity means of the units (4,4',4"), thus obtaining a velocity mean maximum;
- dividing the velocity mean of each unit (4,4',4") by the velocity mean maximum, thus obtaining a velocity ratio;
- summing the velocity ratio and the velocity difference ratio, thus obtaining a sum value; and
- calculating a ratio between the sum value of the unit (4,4',4") and the maximum value of the sum value among the elementary units (4,4', 4"), thus obtaining the score of the unit (4,4',4").

Alternatively to the velocity, other quantities can be used such as the product of the velocity of a given scatterer and the density of the selected scatterers of the elementary unit (4,4',4") containing that scatterer.

Moreover, and preferably, the number of the considered scatterers can be further reduced by excluding among the selected scatterers those having a velocity exceeding the velocity mean in that unit (4,4',4") of a given velocity threshold.

The scores obtained using the product of the density per the velocity can be used alone in the processing of determining the priority of inspection or in combination with the scores obtained by using the velocity.

In the first case, the processing of determining the priority of inspection of each unit (4,4',4") based on the score comprises ranking the scores of the units (4, 4', 4") and classifying the units (4,4',4"), said scores being calculated on the basis of the density per velocity.

In the second case, the processing of determining the priority of inspection comprises comparing, for each unit (4,4',4"), the score obtained by using the density per velocity and the score calculated on the basis of the velocity.

For each unit (4,4',4"), a final score, is then selected as the score that is greater among the two calculated scores (velocity, density per velocity) and the ranking is performed on the final score.

The arithmetic device can, therefore, execute the step of classifying by means of a neural network algorithm using simultaneously all the types of scores as inputs.

Moreover, as previously mentioned, all the proposed scores (based on velocity and density per velocity) can be calculated for the displacement measurements derived from multi-temporal interferometry measurements of satellite SAR data acquired in both ascending and descending mode.

When only one score per unit (4,4',4") was calculated because only one quantity was used, said quantity being chosen among velocity and density per velocity, the calculating the score can be replicated for ascending mode and descending mode data, so as to obtain for each unit (4,4',4"), a first score, resulting from SAR data acquired in ascending mode, and a second score, resulting from SAR data acquired in descending mode. The calculating the score, therefore, will further comprise:

- comparing, for each unit (4,4', 4"), the first score and the second score;
- calculating, for each unit (4, 4', 4"), a final score, the final score being equal to the first score, if the first score is higher than the second score, and to the second score, if the second score is higher than the first score.

When more than one score per unit (4, 4', 4") was calculated, because at least two quantities were used, said quantities being chosen among velocity and density per velocity, the calculating the score can be replicated for ascending mode and descending mode data, so as to obtain for each unit (4,4',4") and for each quantity, a first score, resulting from SAR data acquired in ascending mode and being calculated on the basis of said quantity, said quantity being chosen among velocity and density per velocity and a second score, resulting from SAR data acquired in descending mode and being calculated on the basis of said quantity. The calculating the score, therefore, will further comprise:

- comparing, for each unit (4,4', 4"), the first score and the second score; and

- calculating, for each unit (4,4',4"), a partial final score relative to said quantity, the partial final score being equal to the first score, if the first score is higher than the second score, and to the second score, if the second score is higher than the first score.

The partial final scores calculated for all the used quantities have, then, to be compared so as obtaining a total final score. To this aim, the latter is calculated as the higher partial final scores.

Finally, in all the situations described above, the arithmetic device is further configured to execute processing of displaying information on the score and/or the risk classes of each unit (4,4',4"). The displaying information can comprise also the color mapping of the scores and/or of the risk classes of each unit (4,4',4") on satellite images of the territory.

Referring to Figure 4, a fourth embodiment of the method of the present invention, is designed for determining the priority of inspection of the portions of a territory and comprises all the steps executed by the arithmetic device of the fourth embodiment of the system of the present invention.

**Claims**

1. A system for determining the priority of inspection of environmental and man-made objects of the earth's surface comprising an arithmetic device that is configured to execute:

   - processing of importing displacement measurement data derived from multi-temporal interferometry measurements of satellite SAR data over the objects to be monitored;
   - processing of importing at least one information data record about the objects, said information data being selected from the group consisting of: location, geometry, material, size, age, topology, function, past failures, service levels, traffic data, geology, geomorphology, digital elevation model, slope and aspect;
   - processing of subdividing the objects into a plurality of elementary units (1, 1', 1", 2, 2', 2", 3, 3", 3", 4, 4', 4"), each of said unit (1, 1', 1", 2, 2', 2", 3, 3", 3", 4, 4', 4") comprising a plurality of persistent scatterers and/or distributed scatterers;
- calculating a coherence value for each of the persistent scatterers and/or distributed scatterers;
- calculating a first quantity value for each of the persistent scatterers and/or distributed scatterers, said first quantity being dependent on the coherence value;
- processing of selecting the scatterers having a first quantity value above a fixed threshold, thus obtaining a set of selected scatterers for each elementary unit (1, 1', 1", 2, 2', 2", 3, 3", 3", 4, 4', 4");
- calculating at least a score for each elementary unit (1, 1', 1", 2, 2', 2", 3, 3", 3", 4, 4', 4");
- processing of determining the priority of inspection of each unit (1, 1', 1",2,2',2",3,3",3",4,4',4") based on the score; and
- processing of displaying information on the score of each unit (1,1',1", 2,2',2",3,3",3",4,4',4") and/or a result of the determining of the priority of inspection on an output device;

**characterized in that** the calculating the score comprises:

   - calculating at least a second quantity dependent on the displacement for each selected scatterer so as to obtain a second quantity value for each selected scatterer;
   - calculating, for each unit (1,1',1",2,2',2",3,3",3",4,4',4"), a mean of the second quantity value of the selected scatterers inside the unit (1,1', 1",2,2',2",3,3",3",4,4',4"), so as to obtain a second quantity mean for each unit (1,1',1",2,2',2",3,3",3",4,4',4"); and
   - performing the following steps:

      • calculating a maximum value of the second quantity means of the units (1,1',1",2,2',2",3,3",3",4,4',4"), thus obtaining a second quantity mean maximum; and
      • dividing the second quantity mean of each unit (1,1',1",2,2',2", 3, 3", 3", 4, 4', 4") by the second quantity mean maximum, thus obtaining the score;

   or

      • calculating, for each unit (1,1',1",2,2',2",3,3",3",4,4',4"), the difference between the second quantity value of each selected scatterer inside the unit (1,1',1",2,2',2",3,3",3",4,4',4") and the second quantity mean of the unit (1,1',1",2,2',2",3,3",3", 4,4',4"), so as to obtain a second quantity difference value for each selected scatterer;

- calculating, for each unit (1,1',1",2,2',2",3,3",3",4,4',4"), a mean of the second quantity difference values among the selected scatterers inside the unit (1,1',1",2,2',2",3,3",3",4, 4',4"), so as to obtain a second quantity difference mean for each unit (1,1',1",2,2',2",3,3",3",4,4',4");
- calculating a maximum value of the second quantity difference mean of the units (1,1',1",2,2',2",3,3",3",4,4',4"), thus obtaining a second quantity difference mean maximum;
- dividing the second quantity difference mean of each unit (1,1', 1",2,2',2",3,3",3",4,4',4") by difference mean maximum, thus obtaining a second quantity difference ratio;
- calculating a maximum value of the second quantity means of the units (1, 1', 1", 2, 2', 2", 3, 3", 3", 4, 4', 4"), thus obtaining a second quantity mean maximum;
- dividing the second quantity mean of each unit (1,1',1",2,2',2", 3,3",3",4,4',4") by the second quantity mean maximum, thus obtaining a second quantity ratio;
- summing the second quantity ratio and the second quantity difference ratio, thus obtaining a sum value; and
- calculating a ratio between the sum value of the unit (1, 1', 1", 2, 2', 2", 3, 3", 3", 4, 4', 4") and the maximum value of the sum value among the elementary units (1,1',1",2,2',2",3,3",3",4, 4',4"), thus obtaining the score of the unit (1,1',1",2,21,2",3, 3",3",4,4',4").

2. The system according to claim 1 wherein the first quantity (NC) value of a scatterer is given by the following equation, if the coherence value of that scatterer is higher than a coherence threshold (SC):

$$NC = 0.5 + 0.5 * \frac{Coh - SC}{1 - SC}$$

where *Coh* is the coherence value of the scatterer and *SC* is the coherence threshold; or by the following equation, if the coherence value of that scatterer is lower than the coherence threshold (*SC*) and is different from the minimum coherence value (*Coh$_{min}$*) of the scatterers inside the unit (1,1',1",2,2',2",3, 3",3",4,4',4"):

$$NC = 0.5 + 0.5 * \frac{SC - Coh}{SC - Coh_{min}}$$

where *Coh* is the coherence value of the scatterer, *SC* is the threshold and *Coh$_{min}$* is the minimum coherence value of the scatterers inside the unit (1,1',1",2,2', 2",3,3",3",4,4',4"); or by the following equation if the coherence value of that scatterer is zero:

$$NC = 0$$

or by the following equation, if the coherence value of that scatterer is equal to the coherence threshold:

$$NC = 0.5$$

3. The system according to claim 1 or 2 wherein said fixed threshold is comprised between 0.4 and 0.6.

4. The system according to any of the claims from 1 to 3 wherein the second quantity for each selected scatterer is the velocity of that scatterer.

5. The system according to any of the claims from 1 to 3 wherein the second quantity for each selected scatterer is a product of the velocity of that scatterer and the density of the selected scatterers of the elementary unit (1, 1', 1", 4,4', 4") containing that scatterer.

6. The system according to any of the claims from 1 to 3 wherein the second quantity is a product of the velocity of that scatterer and the density of those scatterers that belong to a subset of the selected scatterers in the elementary unit (1,1',1",4,4',4") containing that scatterer.

7. The system according to claim 6 wherein the subset comprises only those selected scatterers having a velocity exceeding the velocity mean in that unit (1, 1',1",4,4',4") of a given velocity threshold.

8. The system according to any of the claims from 1 to 3 wherein the second quantity for each selected scatterer is the acceleration of that scatterer.

9. The system according to claim 6 wherein the object is a linear infrastructure and the elementary unit (1,1',1") is an area surrounding a segment of the infrastructure.

10. The system according to any of the claims from 1 to 8 wherein the object is a point infrastructure and the elementary unit (3, 3", 3") is a circular area centred in a point of the infrastructure.

11. The system according to any of the claims from 1 to 6 wherein the object is a polygonal infrastructure and the elementary unit (2,2',2") is an area surrounding a polygon of the infrastructure.

12. The system according to any of the claims from 1 to 6 wherein the object is a territory and the elementary unit (4,4',4") is a circular shaped or polygonal shaped area, the plurality of the elementary units (4, 4', 4") forming a grid covering the territory.

13. The system according to any of the preceding claims wherein the processing of determining the priority of inspection of each unit (1,1',1",2,2',2",3,3",3", 4,4',4") based on the score comprising ranking the score of the units (1,1',1", 2,2',2",3,3",3",4,4',4") and/or classifying the units (1,1',1",2,2',2",3,3", 3",4,4',4") based on the scores in one of the following risk classes:

    - high risk, if the score is higher than a upper score threshold;
    - intermediate risk, if the score is comprised between a lower score threshold and the upper score threshold; and
    - low risk, if the score is lower than the lower score threshold.

14. The system according to the preceding claim wherein the arithmetic device uses a neural network algorithm for classifying the scores of the units (1,1',1",2,2', 2",3,3",3",4,4',4") as input of said algorithm.

15. The system according to claim 13 or 14 wherein the displaying information comprise displaying the scores and/or risk classes of each unit (1, 1', 1", 2, 2', 2",3,3",3", 4,4',4").

16. The system according the preceding claim wherein the processing of displaying information comprises color mapping the scores and/or risk classes of each unit (1, 1', 1", 2, 2', 2", 3, 3", 3", 4, 4', 4") on satellite images of the object.

17. A method for determining the priority of inspection of environmental and man-made objects comprising:

    - importing displacement measurement data derived from multi-temporal interferometry measurement of satellite SAR data over the objects to be monitored;
    - importing at least one information data record about the objects, said information data being selected from the group consisting of: location, geometry, material, size, age, topology, function, past failures, service levels, traffic data, geology, geomorphology, digital elevation model, slope and aspect;
    - subdividing the objects into a plurality of elementary units (1,1',1",2, 2',2",3,3",3",4,4',4"), each of said unit (1,1',1",2,2',2",3,3",3",4, 4', 4") comprising a plurality of persistent scatterers and/or distributed scatterers;
    - calculating a coherence value for each of the persistent scatterers and/or distributed scatterers;
    - calculating a first quantity value for each of the persistent scatterers and/or distributed scatterers, said first quantity being dependent on the coherence value;
    - selecting the scatterers having a first quantity value above a fixed threshold, thus obtaining a set of selected scatterers for each elementary unit (1,1',1",2,2',2",3,3",3",4,4',4");
    - calculating at least a score for each elementary unit (1, 1', 1", 2, 2', 2", 3, 3", 3", 4, 4', 4");
    - determining the priority of inspection of each unit (1, 1', 1", 2, 2', 2", 3, 3", 3", 4, 4', 4") based on the score; and
    - displaying information on the score of each unit (1,1',1",2,2',2",3,3", 3",4,4',4") and/or a result of the determining of the priority of inspection;

**characterized in that** the calculating the score comprises:

    - calculating at least a second quantity dependent on the displacement for each selected point so as to obtain a second quantity value for each selected point;
    - calculating, for each unit (1,1',1",2,2',2",3,3",3",4,4',4"), a mean of the second quantity value of the selected scatterers inside the unit (1, 1', 1",2,2',2",3,3",3",4,4',4"), so as to obtain a second quantity mean for each unit (1,1',1",2,2',2",3,3",3",4,4',4"); and
    - performing the following steps:

        • calculating a maximum value of the second quantity means of the units, thus obtaining a second quantity mean maximum; and
        • dividing the second quantity mean of each unit (1,1',1",2,2',2", 3,3",3",4,4',4") by the second quantity mean maximum, thus obtaining the score;

or

        • calculating, for each unit (1,1',1",2,2',2",3,3",3",4,4',4"), the second quantity difference between the second quantity value of each selected point inside the unit (1,1',1",2,2',2",3,3",3",4, 4',4") and the second quantity mean of the unit (1,1',1",2,2', 2",3,3",3",4,4',4"), so as to obtain a second quantity difference value for each selected point;
        • calculating, for each unit (1,1',1",2,2',2",3,3",3",4,4',4"), a mean of the second quantity difference values among the selected scatterers inside the unit (1,1',1",2,2',2",3,3",3",4, 4',4"), so as to obtain a second quantity difference mean for each unit (1,1',1",2,2',2",3,3",3",4,4',4");

• calculating a maximum value of the second quantity difference mean of the units (1,1',1",2,2',2",3,3",3",4,4',4"), thus obtaining a second quantity difference mean maximum;

• dividing the second quantity difference mean of each unit (1,1', 1",2,2',2",3,3",3",4,4',4") by second quantity difference mean maximum, thus obtaining a second quantity difference ratio;

• calculating a maximum value of the second quantity means of the units (1,1',1",2,2',2",3,3",3",4,4',4"), thus obtaining a second quantity mean maximum;

• dividing the second quantity mean of each unit (1,1',1",2,2',2", 3,3",3",4,4',4") by the second quantity mean maximum, thus obtaining a second quantity ratio;

• summing the second quantity ratio and the second quantity difference ratio, thus obtaining a sum value; and

• calculating a ratio between the sum value of the unit (1,1',1",2, 2',2",3,3",3",4,4',4") and the maximum value of the sum value among the elementary units, thus obtaining the score of the unit (1,1',1",2,2',2",3,3",3",4,4',4").

Fig.1

Fig.2

Fig.3

Fig.4

Europäisches
Patentamt

European
Patent Office

Office européen
des brevets

# EUROPEAN SEARCH REPORT

Application Number

EP 21 18 1986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PEDUTO DARIO ET AL: "Empirical fragility and vulnerability curves for buildings exposed to slow-moving landslides at medium and large scales", LANDSLIDES, SPRINGER BERLIN HEIDELBERG, BERLIN/HEIDELBERG, vol. 14, no. 6, 13 April 2017 (2017-04-13) , pages 1993-2007, XP036373065, ISSN: 1612-510X, DOI: 10.1007/S10346-017-0826-7 [retrieved on 2017-04-13] * abstract; figures 4b, 5c, 5d, 6d * * page 1994, right-hand column, lines 18-25 * * page 1995, right-hand column, lines 13-32 * * page 1996, left-hand column, lines 9-19 * * page 1996, right-hand column, lines 3-6, 37-48 * * page 2001, right-hand column, lines 16-23 * * page 2004, right-hand column, lines 3-10 * ----- -/-- | 1-17 | INV. G01S13/90 G01S7/41 |
| | | | **TECHNICAL FIELDS SEARCHED (IPC)** |
| | | | G01S |

The present search report has been drawn up for all claims

| Place of search | Date of completion of the search | Examiner |
|---|---|---|
| Munich | 26 November 2021 | Rodríguez González |

page 1 of 3

Europäisches
Patentamt

European
Patent Office

Office européen
des brevets

# EUROPEAN SEARCH REPORT

Application Number

EP 21 18 1986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAPPO NICOLETTA ET AL: "Slow-moving landslides interacting with the road network: Analysis of damage using ancillary data, in situ surveys and multi-source monitoring data", ENGINEERING GEOLOGY, ELSEVIER SCIENCE PUBLISHERS, AMSTERDAM, NL, vol. 260, 30 July 2019 (2019-07-30), XP085872964, ISSN: 0013-7952, DOI: 10.1016/J.ENGGEO.2019.105244 [retrieved on 2019-07-30] * abstract; figures 4b, 9b, 9d * * page 3, right-hand column, lines 23-27, 39-44 * * page 5, left-hand column, lines 2-23 * * page 5, right-hand column, lines 6-12 * * page 8, right-hand column, lines 18-22 * * page 9, left-hand column, lines 4-12 * ----- | 1-17 | |
| A | PRATESI FABIO ET AL: "Rating health and stability of engineering structures via classification indexes of InSAR Persistent Scatterers", INTERNATIONAL JOURNAL OF APPLIED EARTH OBSERVATION ANDGEOINFORMATION, ELSEVIER, AMSTERDAM, NL, vol. 40, 22 April 2015 (2015-04-22), pages 81-90, XP029217791, ISSN: 0303-2434, DOI: 10.1016/J.JAG.2015.04.012 * abstract; figure 5 * * page 83, left-hand column, line 27 - page 83, right-hand column, line 9 * * page 84, left-hand column, lines 6-10 * * page 84, right-hand column, lines 12-24 * * page 89, left-hand column, lines 33-36 * ----- -/-- | 1-17 | TECHNICAL FIELDS SEARCHED (IPC) |

The present search report has been drawn up for all claims

| Place of search | Date of completion of the search | Examiner |
|---|---|---|
| Munich | 26 November 2021 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

Application Number

EP 21 18 1986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 109 991 601 A (BEIJING VASTITUDE TECH CO LTD) 9 July 2019 (2019-07-09) * the whole document * ----- | 1-17 | |
| A | PEDUTO D ET AL: "Analysis of Damage to Buildings in Urban Centers on Unstable Slopes via TerraSAR-X PSI Data: The Case Study of El Papiol Town (Spain)", IEEE GEOSCIENCE AND REMOTE SENSING LETTERS, IEEE, USA, vol. 16, no. 11, 1 November 2019 (2019-11-01), pages 1706-1710, XP011756150, ISSN: 1545-598X, DOI: 10.1109/LGRS.2019.2907557 [retrieved on 2019-10-30] * abstract; figure 5 * * page 1706, right-hand column, line 44 - page 1707, left-hand column, line 30 * * page 1710, left-hand column, lines 21-26 * ----- | 1-17 | |

TECHNICAL FIELDS
SEARCHED      (IPC)

The present search report has been drawn up for all claims

| Place of search | Date of completion of the search | Examiner |
|---|---|---|
| Munich | 26 November 2021 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 1986

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2021

| Patent document cited in search report | Publication date | Patent family member(s) | Publication date |
|---|---|---|---|
| CN 109991601 A | 09-07-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BOVENGA, FABIO ; REFICE, ALBERTO ; NUTRI-CATO, RAFFAELE ; GUERRIERO, LUCIANO ; CHIARADIA, MT.** SPINUA: a flexible processing chain for ERS/ENVISAT long term interferometry. *Proceedings of ESA-ENVISAT Symposium,* 2005, 6-10